# EUROPEAN PATENT APPLICATION

(11) **EP 4 804 455 A1**
(43) Date of publication of application: **09.09.2026**
(21) Application number: 25161705.6
(22) Date of filing: 04.03.2025
(51) Int. Cl.: H04L 9/08

(54) **FIRST METHOD FOR A SECURE EXCHANGE OF A FIRST PRE-SHARED KEY BETWEEN A FIRST NODE AND A SECOND NODE FOR AN IPSEC COMMUNICATION**

(71) Applicant: Valeo Comfort and Driving Assistance, 94000 Créteil (FR)
(72) Inventor: PITCHAIMANI, Ramakrishnan, 94000 Créteil (FR); RASOAMANANA, Aina, 94000 Créteil (FR)
(74) Representative: Delaval, Guillaume Laurent

(57) **Abstract**

The invention relates to a first method (Mth) for secure exchanging a first pre-shared key (PSK) between a first node (A) and a second node (B) for an IPSec communication, said first node (A) comprising a first secure zone (Z'_{A}) where a master key (MK) is stored and a first non-secure zone (Z'_{A}), and said second node (B) comprising a second secure zone (Z_{B}) where the master key (MK) is stored and a second non-secure zone (Z'_{B}), wherein said first method (Mth) comprises:
- generating by said first node (A) a first nonce (N) at each boot session (Bt),
- deriving by said first node (A) in the first unsecured zone (Z'_{A}) a first pre-shared key (PSK) based on said first nonce (N) and on said master key (MK)
- encrypting by said first node (A) the first pre-shared key (PSK) with the master key (MK) to generate a first encrypted nonce (ENM),
- transmitting by said first node (A) said first encrypted nonce (ENM) to the second node (B),
- receiving by said second node (B) from said first node (A) said first encrypted nonce (ENM),
- decrypting by said second node (B) said first encrypted nonce (ENM) with the master key (MK) to retrieve a second nonce (N'),
- deriving by said second node (B) in the second unsecured zone (Z'_{B}) a second pre-shared key (PSK') based on said second nonce (N') and on the master key (MK) using said key derivation function (KDF),
- encrypting by said second node (B) the second nonce (N') with said second pre-shared key (PSK') to generate a second encrypted nonce (ENS),
- transmitting by said second node (B) said second encrypted nonce (ENS) to the first node (A),
- receiving by said first node (A) said second encrypted nonce (ENS) from the second node (B),
- decrypting by said first node (A) said second encrypted nonce (ENS) with the first pre-shared key (PSK) to retrieve a second nonce (N'),
- comparing by said first node (A) the second nonce (N') with the first nonce (N),
- upon the result of said comparison, sending by said first node (A) a result notification (R) to the second node (B),
- receiving by said second node (B) from said first node (A) said result notification (R).

## Description

### FIELD OF THE INVENTION

The present invention relates to a first method for a secure exchange of a first pre-shared key between a first node and a second node for an IPSec communication. Such first method may be used, but not exclusively, in the automotive domain.

### BACKGROUND OF THE INVENTION

In the automotive domain, a first method for a secure exchange of a first pre-shared key between a first node and a second node for an IPSec ("Internet Protocol Security") communication is used for a pre-shared key authentication, well-known by the man skilled in the art, that uses symmetric key to authenticate the nodes to each other.

One problem of this prior art is that if the pre-shared key is compromised, the attacker may have unauthorized access to the network, here the vehicle network in the case of the automotive application. The pre-shared key should be stored in a secure zone such as a hardware security module. But this requires additional interfaces and drivers between the IPSec stack and the hardware security module which complexifies the implementation of the whole.

It is an object of the invention to provide a first method for a secure exchange of a first pre-shared key between a first node and a second node for an IPSec communication, which resolves the problem above-stated.

### SUMMARY OF THE INVENTION

To this end, it is provided a first method of the invention for secure exchanging a first pre-shared key between a first node and a second node for an IPSec communication, that is defined according to claim 1.

Non-limitative embodiments of this first method of the invention are defined in the dependent claims 2 to 6.

In a non-limitative embodiment, the key derivation function is the HKDF function.

In a non-limitative embodiment, the symmetric encryption algorithm is the AES algorithm.

It is also provided a second method of the invention for IPSec communication between a first node and a second node, that is defined according to claim 7.

It is also provided a first node of the invention for a secure exchange of a first pre-shared key with a second node for an IPSec communication, that is defined according to claim 8.

Non-limitative embodiments of this first node are defined in the dependent claims 9 and 10.

In a non-limitative embodiment, the first node is further configured to get the master key from the first secure zone.

To this end, in a non-limitative embodiment, the first node is configured to:
- decrypt the master key in said first secure zone, and
- transfer it to the first non-secure zone to be used for the derivation.

In a non-limitative embodiment, the first node is further configured to delete the master key from the first non-secure zone after the decryption of the second encrypted nonce.

It is also provided a second node of the invention for a secure exchange of a first pre-shared key with a first node for an IPSec communication, that is defined according to claim 11.

Non-limitative embodiments of this second node are defined in the dependent claims 12 and 13.

In a non-limitative embodiment, the second node is further configured to get the master key from the second secure zone.

To this end, in a non-limitative embodiment, the second node is configured to:
- decrypt the master key in said second secure zone, and
- transfer it to the second non-secure zone to be used for the decryption of said first encrypted nonce.

In a non-limitative embodiment, the second node is further configured to delete the master key from the second non-secure zone after the reception of the result notification.

It is also provided a system of the invention that is defined according to claim 14.

A non-limitative embodiment of this system is defined in the dependent claim 15.

### BRIEF DESCRIPTION OF THE DRAWINGS

Some embodiments of methods and/or system in accordance with embodiments of the present invention are now described, by way of example only, and with reference to the accompanying drawings, in which:
Figure 1a is a schematic diagram of a first method for secure exchanging a first pre-shared key between a first node and a second node for an IPSec communication,
Figure 1b illustrates further steps of the first method of figure 1a,
Figure 2 is a schematic diagram of a second method for IPSec communication between a first node and a second node, said second method comprising the steps of the first method of figures 1a and 1b and further steps.
Figure 3 schematically illustrates a non-limitative embodiment of a first node and a second node that each are configured to implement some different steps of the first method of figure 2,
Figure 4 is a schematic view of a first non-limitative embodiment of a system that comprises the first node and the second node of figure 3,
Figure 5 is a schematic view of a second non-limitative embodiment of a system that comprises the first node of figure 3,
Figure 6 is a schematic view of the system of figure 4 or 5 that is a system of a vehicle.

### DESCRIPTION OF EMBODIMENTS OF THE INVENTION

In the following description, well-known functions or constructions by the person skilled in the art are not described in detail since they would obscure the invention in unnecessary detail.

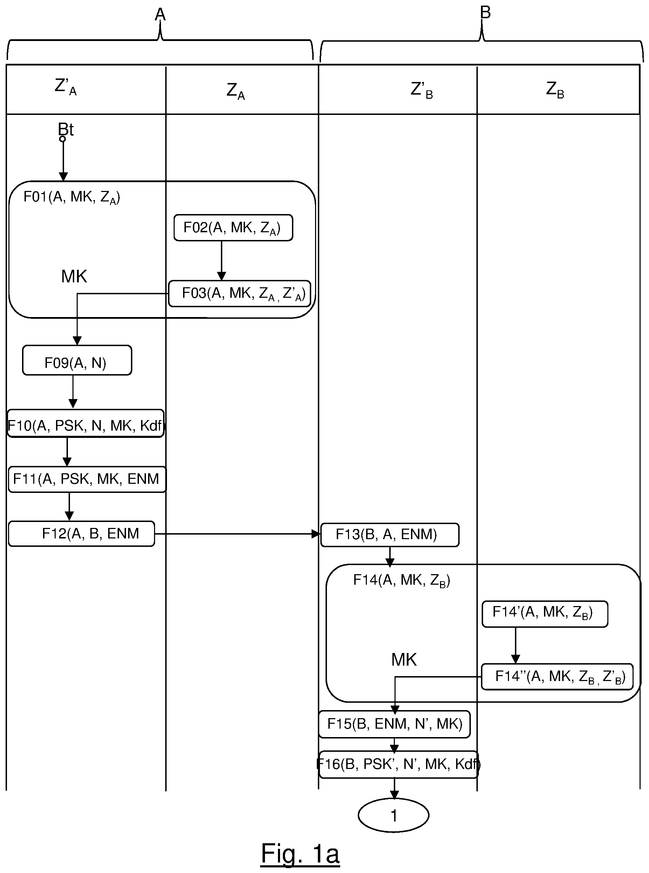

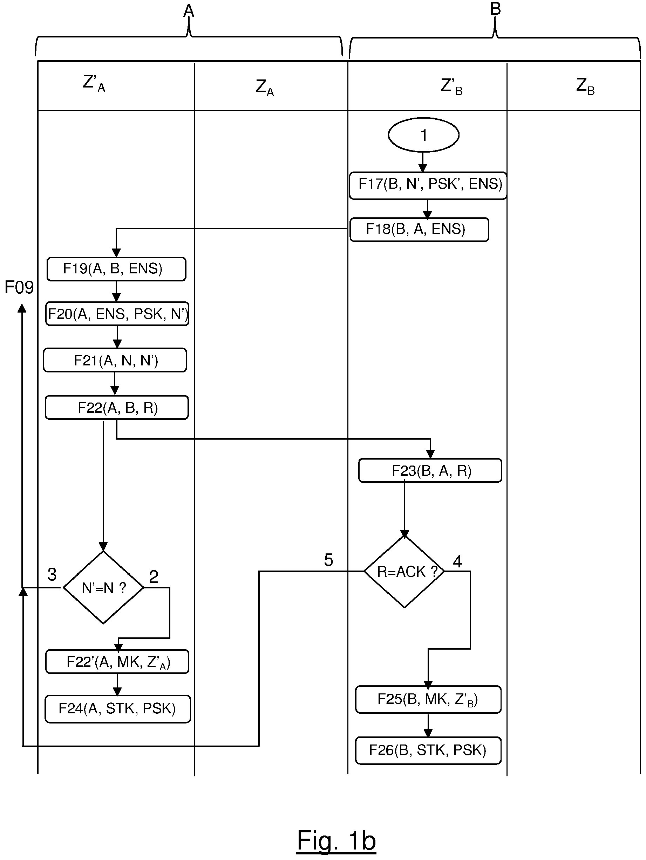

The present invention relates to a first method Mth for secure exchanging a first pre-shared key PSK between a first node A and a second node B for an IPSec communication, said first method Mth being illustrated in figures 1a and 1b. The first pre-shared key PSK is also called session key PSK.

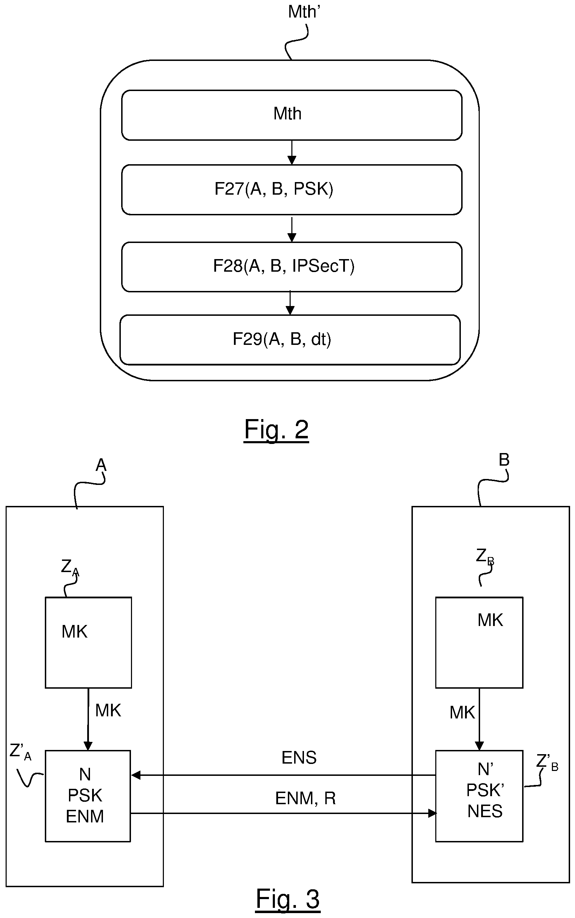

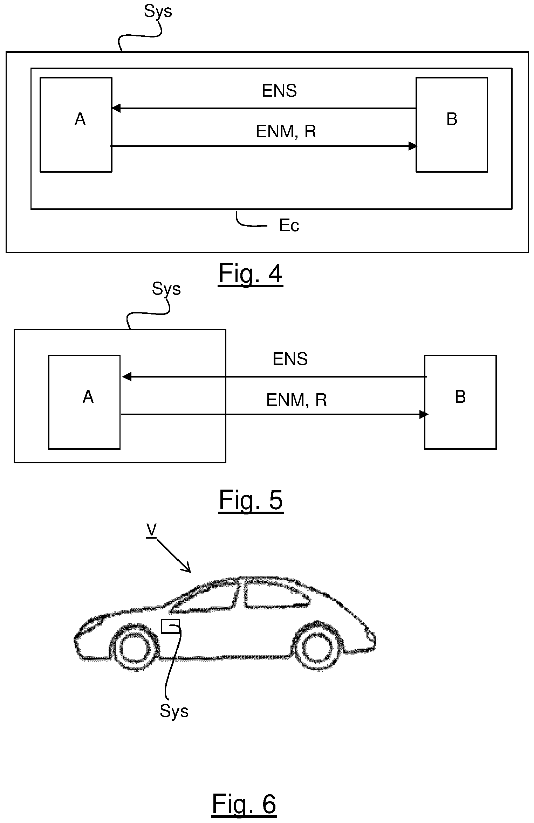

The first node A and the second node B are illustrated in figures 3 to 5. At least one of said first node A or said first node B is part of a system illustrated in figure 4 to 6. As illustrated in figure 3, the first node A comprises a first secure zone Z_{A} and a first non-secure zone Z'_{A}. As illustrated in figure 3, the second node B comprises a first secure zone Z_{B} and a first non-secure zone Z'_{B}. A secure zone is a trusted zone such as a firmware. The firmware is an HSM ("Hardware Security Module") module in a non-limitative embodiment. Hence, a secure zone is an isolated execution environment designed for security-sensitive tasks and storing confidential data. It runs a separate, trusted operating system (often called a Trusted Execution Environment or TEE) and has access to dedicated memory and peripherals. Examples of security-sensitive tasks running include cryptographic operations, key management, secure boot, etc. A non-secure zone is where a regular operating system (like Android or Linux) runs and where most user applications execute. The non-secure zone has limited or no direct access to the resources and memory within the secure zone. So, both first node A and second node B have a trusted operating system and a regular operating system.

In a non-limitative embodiment, the system Sys is a system of a vehicle V as illustrated in figure 6. In a non-limitative embodiment, the vehicle V is a motor vehicle. In non-limitative variants of embodiment, the motor vehicle has a combustion engine, has an electric engine, or a hybrid engine. This non-limitative embodiment of a vehicle V is taken in the following.

Both first node A and second node B are IP based so that the first method Mth can run over TCP or UDP. During the production phase, both first node A and second node B are provisioned with a same device individual Master key MK called master key MK in the following. It is to be noted that if the master key MK is not the same, the whole first method will fail.

It is to be noted that at every boot session Bt, both first node A and second node B need during a key negotiation phase to negotiate an IPSec session secret (also called IPSec session key PSK or session PSK) which needs to be renegotiated at every reboot aka new boot session Bt. To negotiate an IPSec session secret, a dedicated keying mechanism which is the first method Mth between first node A and second node B is used.

The first method Mth is described in reference to figures 1a and 1b.

As described in the following, the first method Mth uses a master key MK.

It is to be noted that the master key MK is stored in the first secure zone Z_{A} of the first node A and is encrypted. In a non-limitative embodiment, the decryption of the master key MK is performed using a symmetric encryption algorithm. In a non-limitative variant of embodiment, said symmetric encryption algorithm is the AES algorithm. The AES algorithm is a robust, secure and standardized encryption algorithm.

Hence, in order to use the master key MK, the first method Mth comprises an initial step F01 illustrated F01(A, Z_{A}, MK)) in figure 1a, getting by the first node A the master key MK from the first secure zone Z_{A}. This step E01 comprises the sub-steps of :
- in step F02 illustrated F02(A, MK, Z_{A})) in figure 1a, decrypting by the first node A the master key MK in said first secure zone Z_{A}, and
- in step F03 illustrated F03(A, MK, Z_{A}, Z'_{A})) in figure 1a, transferring by the first node A the master key MK to the first non-secure zone Z'_{A} to be used for the derivation.

Hence, at each boot session Bt, the master key MK is retrieved from the first secure zone Z_{A}.

This step F01 can be also performed after step F09 and before step F10.

In a non-limitative embodiment, the decryption of the master key MK is performed using the same algorithm as for the encryption.

In step F09 illustrated F09(A, N)) in figure 1a, the first node A generates a first nonce N at each boot session Bt. This step is executed in the first non-secure zone Z'_{A}.

The boot session Bt is executed each time the vehicle V is turned on, in the non-limitative automotive application. So, when the vehicle V is turned on, it automatically powers up the first node A, and the second node B, which leads to the execution of the boot session Bt.

In a non-limitative embodiment, the first node A and the second node B boot/reboot at the same time. The second node B represents the component that responds to first node A when a boot session Bt is executed.

In a non-limitative embodiment, the first nonce N is generated randomly for security purposes.

As a new first nonce N is generated at each boot session Bt, it permits having a fresh first pre-shared key PSK after each boot.

In step F10 illustrated F10(A, PSK, N, MK, Kdf)) in figure 1a, the first node A derives a first pre-shared key PSK based on said first nonce N and on a master key MK using a key derivation function KDF.

The first pre-shared key PSK is the IPSec session key PSK.

It is to be noted that the key derivation function KDF is an agreed key derivation function between first node A and second node B. First node A and second node B are preprogrammed with this key derivation function KDF, during the production phase in a non-limitative example.

The derivation of the first pre-shared key PSK is performed in the first non-secure zone Z'_{A} of said first node A.

In a non-limitative embodiment, the key derivation function KDF is the HKDF function. The HKDF function is based on the HMAC message authentication code. It is not described here as it is known by the man skilled in the art. The HKDF function is a standardized key derivation function. For the HKDF function, the nonce N is used as the salt and the master key MK is the IKM.

In step F11 illustrated F11((A, PSK, MK, ENM)) in figure 1a, the first node A encrypts the first pre-shared key PSK with the master key MK to generate in a first encrypted nonce ENM. This step is executed in the first non-secure zone Z'_{A}.

It allows the protection of the first pre-shared key PSK from an attacker. The first encrypted nonce ENM is generated in the first non-secure zone Z'_{A}.

In a non-limitative embodiment, the encryption of the pre-shared key PSK is performed using a symmetric encryption algorithm to be compliant with the IPSec. In a non-limitative variant of embodiment, said symmetric encryption algorithm is the AES algorithm. The AES algorithm is a robust, secure and standardized encryption algorithm.

It is to be noted that first node A and second node B are preprogrammed with this encryption algorithm.

In step F12 illustrated F12(A, B, ENM)) in figure 1a, the first node A transmits said first encrypted nonce ENM to the second node B which receives it in step F13 illustrated F13(B, A, ENM)) in figure 1a. It receives it in its second non-secure zone Z'_{B}.

In a non-limitative embodiment, the transmission of said first encrypted nonce ENM is performed in a payload of an IP packet. To this end, a TCP or UDP connection can be created. Such type of connection being known, it is not described here.

It is to be noted that the master key MK is also stored in the second secure zone Z_{B} of the second node B.

In order to use the master key MK, the first method Mth further comprises in step F14 illustrated F14(B, Z_{B}, MK)) in figure 1a, getting by the second node B the master key MK from the second secure zone Z_{B}. This step comprises the sub-steps of:
- in step F14' illustrated F14'(A, MK, Z_{A})) in figure 1a, decrypting by the second node B the master key MK in said second secure zone Z_{B}, and
- in step F14" illustrated F14"(A, MK, Z'_{A})) in figure 1a, transferring by the second node B said master key MK to the second non-secure zone Z'_{B} to be used for the decryption of the first encrypted nonce ENM.

Hence, at each boot session Bt, the master key MK is retrieved from the second secure zone Z_{B}.

In a non-limitative embodiment, the decryption of the master key MK is performed with an AES algorithm.

In step F15 illustrated F15(B, ENM, N', MK) in figure 1a, the second node B decrypts said first encrypted nonce ENM with the master key MK to retrieve a second nonce N'. In a non-limitative embodiment, the decryption is performed using an AES algorithm. This step is executed in the second non-secure zone Z'_{B}.

In step F16 illustrated F16(B, PSK', N', MK, Kdf) in figure 1a, the second node B derives a second pre-shared key PSK' based on said second nonce N' and on the master key MK using said key derivation function KDF.

The derivation is performed in the second non-secure zone Z'_{B}.

In step F17 illustrated F17(B, N', PSK', ENS) in figure 1b, the second node B encrypts the second nonce N' with said second pre-shared key PSK' to generate a second encrypted nonce ENS. This step is executed in the second non-secure zone Z'_{B}.

It encrypts it with the supported encryption algorithm which has been used for generating the first encrypted nonce ENM, here the AES algorithm in the non-limitative example. It is to be noted that contrary to step F11, it doesn't not encrypt it with the master key MK.

In step F18 illustrated F18(B, A, ENS) in figure 1b, the second node B transmits said second encrypted nonce ENS to the first node A which receives it in step F19 illustrated F19(A, B, ENS) in figure 1b. As the second encrypted nonce ENS is encrypted, it is secure against an attacker who spies on the communication between the first node A and the second node B.

In a non-limitative embodiment, the transmission of said second encrypted nonce ENS is performed in a payload of an IP packet. To this end, a TCP or UDP connection can be created. Such type of connection being known, it is not described here.

As the encrypted nonce ENS has been generated with a second pre-shared key PSK' derived from the second nonce N' and the master key MK, it will allow the first node A to check if the second nonce N' is identical to the first nonce N.

Hence, in step F20 illustrated F20(A, ENS, PSK, N')) in figure 1b, the first node A decrypts the second encrypted nonce ENS with the first pre-shared key PSK to retrieve the second nonce N'. It is decrypted with the same algorithm that has been used for the encryption. In a non-limitative embodiment, it is decrypted with the AES algorithm. This step is executed in the first non-secure zone Z'_{A}.

In step F21 illustrated F21(A, N, N')) in figure 1b, the first node A compares the second nonce N' with the first nonce N. This step is executed in the first non-secure zone Z'_{A}.

Upon the result of the comparison, in step F22 illustrated F22(A, B, R) in figure 1b, the first node A sends a result notification R to the second node B which receives it in step F23 illustrated F23(B, A, R) in figure 1b.

The result notification R is to acknowledge the end of the key negotiation phase and to acknowledge the success or the failure of this key negotiation phase.

The first pre-shared key PSK has been derived from the first nonce N and from the master key MK while the second pre-shared key PSK' has been derived from the second nonce N' and from the master key MK.

If the comparison is positive, that is to say the second nonce N' matches the first nonce N, it means that the second pre-shared key PSK' is the same as the first pre-shared key PSK, and therefore a successful transmission of the first pre-shared key PSK has been performed. Hence, an IPSec communication can be further performed. In this case, the result notification R is an acknowledgment ACK. It tells both first node A and second node B that the exchange of the first pre-shared key PSK via the first encrypted nonce ENM is successfully accomplished. In this case (branch 2 illustrated in figure 1b), in a non-limitative embodiment, in step F22' illustrated F221'(A, MK, Z'_{A}) in figure 1b, As it is not used anymore, the first node A deletes the master key MK from the first non-secure zone Z'_{A} after the decryption of the second encrypted nonce ENS. It avoids leaving the master key MK in the first unsecured zone Z'_{A} that is open to attacks.

In this case also, the first method Mth further comprises in step F24 illustrated F24(A, STK, PSK), configuring by the first node A its IPSec stack STK to use this exchanged first pre-shared key PSK.

When the result notification R is an acknowledgment ACK (branch 4 illustrated in figure 1b), in a non-limitative embodiment, in step F25 illustrated F25(B, MK, Z'_{B}) in figure 1a, the second node B deletes the master key MK from the second non-secure zone Z'_{B} after the reception of the result notification R. It avoids leaving the master key MK in the second unsecured zone Z'_{B} that is open to attacks. It is to be noted that the master key MK can't be removed after the derivation of the second pre-shared key PSK' because if there is a mismatch between the first nonce N and the second nonce N', the whole process restarts from the beginning.

When the result notification R is an acknowledgment ACK, the first method Mth further comprises in step F26 illustrated F26(B, STK, PSK), configuring by the second node B its IPSec stack to use this exchanged first pre-shared key PSK.

If the comparison is negative, that is to say the second nonce N' does not match the first nonce N, it means that the second pre-shared key PSK' is different from the first pre-shared key PSK, and therefore there was a problem with the transmission of the first pre-shared key PSK. Hence, an IPSec communication can't be further performed. In this case, the result notification R is a denial. It tells both first node A and second node B that the exchange of the first pre-shared key PSK via the first encrypted nonce ENM has failed. Hence, in this case (branches 3 and 5 illustrated in figure 1b), the first method Mth restarts from the beginning, that is to say from step F09.

Hence, thanks to the first method Mth, since the first pre-shared key PSK is derived from a master key MK, the exchange is more secure. This first pre-shared key PSK is used for mutual authentication and to create a secure IPSec tunnel for an IPSec communication.

Hence, for an IPSec communication, a second method Mth' illustrated in figure 2 for IPSec communication between the first node A and the second node B can be performed. This second method Mth' comprises the steps of the first method Mth and further comprises :

In step F27 illustrated F27(A, B, PSK) illustrated in figure 2, the first node A and the second node B perform a mutual authentication using the first pre-shared key PSK. A mutual authentication being well-known by the man skilled in the art, is it not described here. It is to be noted that this step F27 is executed with the IKE (Internet Key Exchange) protocol. It means that an IKE tunnel has been set up beforehand between the first node A and the second node B. Note that IKE protocol is part of IPSec, and IPsec uses IKE protocol for mutual authentication and also exchange of keys which will be used to exchange data on the IPSec level.

In step F28 illustrated F28(A, B, IPSecT) illustrated in figure 2, the first node A and the second node B set up an IPSec tunnel IPSecT. Once the IPSec tunnel IPSecT is set up, data can be transmitted safely between the first node A and the second node B. The setting up of an IPSec tunnel being well-known by the man skilled in the art, it is not described here.

Then, In step F29 illustrated F29(A, B, dt) illustrated in figure 2, the first node A and the second node B exchange data dt within data packets. This step is part of the IPSec.

Hence, the first method Mth and the second method Mth' are implemented by the first node A and the second node B.

As illustrated in figure 4, in a first non-limitative embodiment, the system Sys comprises both the first node A and the second node B. In the non-limitative automotive application where the system Sys is a system of a vehicle 3, first node A and second node B are configured to exchange vehicle operational data such as in non-limitative examples speed, position of the vehicle, distances to objects (vehicle, a pedestrian, a bicycle etc.) and security relevant data. Such electronic devices are electronic control units (referred to as ECU) for the automotive application. In this first non-limitative embodiment, in a non-limitative variant of embodiment illustrated in figure 4, the first node A and the second node B are arranged on the same electronic support Ec. In a non-limitative embodiment, said electronic support is a printed circuit board assembly called PCBA.

In a first non-limitative variant of embodiment, the system Sys is a telematics control unit referred to as a TCU. In this case, in a non-limitative example, the first node A is a NAD ("Network Access Device") cellular electronic device referred to as NAD, and the second node B is a V2X-AP ("Application Processor") electronic device referred to as V2X-AP. The NAD is configured to receive the cellular signals from a cellular antenna and to send and/or receive data to/from internet. The V2X-AP is configured to send and/or receive data to/from other vehicles or to/from infrastructures such as traffic lights. If the V2X-AP needs some data from internet, it gets this through the NAD. For V2X communication, V2X supports direct communication between devices (e.g., vehicles, infrastructure, or pedestrians) without relying on cellular base stations or a core network.

In non-limitative examples, data transferred between the NAD and the V2X-AP are :
- software update package for the V2X-AP is received by the NAD and forwarded to the V2X-AP,
- V2X security credentials such as in a non-limitative example pseudonym certificates are downloaded by the NAD and forwarded to the V2X-AP.

In a second non-limitative variant of embodiment, the first node A is and ADAS electronic control unit and the second node B is a braking electronic control unit. The ADAS ECU is configured to detect obstacles and send braking commands to the braking ECU. Hence, one obtains a secure ECU communication for braking.

In a third non-limitative variant of embodiment, the first node A is an infotainment ECU and the second node B is another ECU like navigation or media control units in non-limitative examples. The infotainment ECU communicates with these other ECUs. IPSec is used to encrypt and authenticate data exchanges between the infotainment ECU and these other ECUs, protecting sensitive user information (e.g., location or preferences) from interception or unauthorized access within the vehicle's network. Hence, one obtains infotainment data protection.

In a second non-limitative embodiment, the system Sys comprises one node among the first node A and the second node B. In a non-limitative example illustrated in figure 5, it comprises the first node A, the second node B being outside of the vehicle V. In this case, the second node B is an electronic control unit of another vehicle, or a controller of a base station or of an infrastructure. Using IPSec, this communication is encrypted (via ESP) and authenticated to prevent tampering or unauthorized access. This ensures safe and reliable execution of critical braking actions in real time.

Hence, the first node A is part of the vehicle V, or independent from the vehicle V. In the same manner, the first node B is part of the vehicle V, or independent from the vehicle V.

The first node A is configured to :
- generate a first nonce N at a boot session Bt,
- derive the first pre-shared key PSK based on said first nonce N and on the master key MK using the key derivation function KDF,
- encrypt the first pre-shared key PSK with the master key MK to generate a first encrypted nonce ENM,
- transmit said first encrypted nonce ENM to the second node B.

The first node A is further configured to get the master key MK from the first secure zone Z_{A}. To this end, it is configured to:
- decrypt the master key MK in said first secure zone Z_{A}, and
- transfer it to the first non-secure zone Z'_{A} to be used for the derivation.

The first node A is further configured to :
- receive a second encrypted nonce ENS from the second node B that has been encrypted with a second pre-shared key PSK',
- decrypt said second encrypted nonce ENS with the first pre-shared key PSK to retrieve a second nonce N',
- compare the second nonce N' with the first nonce N,
- upon the result of the comparison, send a result notification R to the second node B.

In a non-limitative embodiment, the first node A is further configured to delete the master key MK from the first non-secure zone Z'_{A} after the decryption of the second encrypted nonce ENS. It avoids the master key MK to be exposed to an attack.

In a non-limitative embodiment, the first node A is further configured to configure the IPSec stack STK to use this exchanged first pre-shared key PSK.

The second node B is configured to :
- receive from said first node A first encrypted nonce ENM that is based on a first pre-shared key PSK and on a master key MK, said first pre-shared key PSK being derived from a first nonce N and said master key MK,
- decrypt said first encrypted nonce ENM with the master key MK to retrieve a second nonce N',
- derive a second pre-shared key PSK' using said second nonce N' and the master key MK using the key derivation function KDF,
- encrypt the second nonce N' with the second pre-shared key PSK' to generate a second encrypted nonce ENS,
- transmit said second encrypted nonce ENS to the first node A.

The second node B is further configured to receive from said first node A result notification R based on a comparison of the second nonce N' with the first nonce N generated by the first node A. As mentioned, the result notification R is either an acknowledgment, or a denial.

The second node B is further configured to get the master key MK from the second secure zone Z_{B}. To this end, it is configured to:
- decrypt the master key MK in said second secure zone Z_{B}, and
- transfer it to the second non-secure zone Z'_{B} to be used for the decryption of said first encrypted nonce ENM.

In a non-limitative embodiment, the second node B is further configured to delete the master key MK from the second non-secure zone Z'_{B} after the reception of the result notification R.

In a non-limitative embodiment, the first node A is further configured to configure the IPSec stack STK to use this exchanged first pre-shared key PSK.

It is to be understood that the present invention is not limited to the aforementioned application, embodiments and variations and modifications may be made without departing from the scope of the invention. All statements herein reciting principles, aspects, and embodiments of the invention, as well as specific examples thereof, are intended to encompass equivalents thereof. In this respect, the following remarks are made. Hence, in other non-limitative embodiments, the first node A and the second node B can be automotive sensors or any other electronic devices. Hence, in other non-limitative embodiments, the first node A and the second node B can be any other controllers of a vehicle V also called electronic control units, or any electronic devices for other applications different from automotive applications. In a non-limitative embodiment, the first node A can be a computer device and the second node B can be a server.

Hence, some embodiments of the invention may comprise one or a plurality of the following advantages:
- it provides a secure means to exchange a session key PSK between two nodes for IPSec communication, and thus a secure means to authenticate and create a secure IPSec tunnel.
- it allows both first node A and second node B to be protected by an IPSec PSK mechanism using a secure key negotiation phase,
- (a) regarding scalability and flexibility :
   - it gives adaptability to device reboots. Indeed, the session key PSK is renegotiated every time the nodes reboot, ensuring that a fresh key is used for every session. This is particularly useful in dynamic environments like TCUs where devices may reboot frequently,
   - it gives easy integration in large systems : the keying mechanism is designed to be flexible, allowing it to be integrated into a variety of systems, including those with multiple devices that require secure communication (e.g., a fleet of vehicles with multiple TCUs),
   - (b) regarding reduced key management complexity :
   - it gives master key MK provisioning : devices are provisioned with a unique master MK, which simplifies the management of device secrets. The Master key MK is only used to derive the session key PSK, reducing the need to manage multiple keys manually for each session, and it is easier to implement compared to more complex solution where the session key PSK handling is performed directly in a secured zone,
   - (c) regarding improvement of performance :
   - it gives faster key derivation : we can flexibly use the key derivation function (KDF) to derive a session key PSK, allowing for faster computation of the session key PSK without compromising security. There are a variety of different KDFs available, each has its own computation advantage. This is especially beneficial in systems where low latency is important, such as in real-time vehicular communications,
   - it gives efficient use of resources : the use of a dedicated keying mechanism, including optimized cryptographic operations, helps reduce the computational load on both nodes, improving overall system performance,
   - (d) regarding resilience and robustness :
      - it gives fresh session keys after reboots : renegotiating the session key PSK at every reboot ensures that old keys are discarded and new keys are generated. This practice increases the resilience of the system, making it harder for attackers to use old or compromised keys.
      - it gives authenticated parameter transport: the secure transport of the nonce used in deriving the session key PSK prevents potential tampering or interception during the exchange process, ensuring that both nodes have the correct session key,
      - (e) regarding simplified security validation :
         - it gives proof of successful derivation: by retransmitting by the second node B the same nonce (encrypted with session key PSK) back to the first node A, the nodes can easily verify that they both have derived the same session key PSK, adding an extra layer of validation. This minimizes the risk of misconfiguration or key derivation errors,
         - it gives automated session key validation: the ability to automatically verify successful key derivation means that both nodes can quickly confirm that the session key is valid, reducing the time to establish a secure connection,
         - (f) : regarding compatibility with existing systems :
            - it gives compatibility with IPSec: since the keying mechanism is designed specifically for IPSec, it ensures that the system will be compatible with existing IPSec-based communication protocols, which are widely used in securing communications in various industries,
            - it gives support for various device types: the keying mechanism works for both nodes in a TCU, ensuring compatibility across different types of devices,
            - (g) regarding future proofing :
               - about adaptable cryptographic algorithms: The keying mechanism can support different cryptographic algorithms for key derivation, which means it can adapt to future advancements in cryptography or changes in security requirements.

## Claims

1. A first method (Mth) for secure exchanging a first pre-shared key (PSK) between a first node (A) and a second node (B) for an IPSec communication, said first node (A) comprising a first secure zone (Z'_{A}) where a master key (MK) is stored and a first non-secure zone (Z'_{A}), and said second node (B) comprising a second secure zone (Z_{B}) where said master key (MK) is stored and a second non-secure zone (Z'_{B}), wherein said first method (Mth) comprises:
- generating by said first node (A) a first nonce (N) at each boot session (Bt),
- deriving by said first node (A) in the first non-secured zone (Z'_{A}) a first pre-shared key (PSK) based on said first nonce (N) and on said master key (MK),
- encrypting by said first node (A) the first pre-shared key (PSK) with the master key (MK) to generate a first encrypted nonce (ENM),
- transmitting by said first node (A) said first encrypted nonce (ENM) to the second node (B),
- receiving by said second node (B) from said first node (A) said first encrypted nonce (ENM),
- decrypting by said second node (B) said first encrypted nonce (ENM) with the master key (MK) to retrieve a second nonce (N'),
- deriving by said second node (B) in the second non-secured zone (Z'_{B}) a second pre-shared key (PSK') based on said second nonce (N') and on the master key (MK) using said key derivation function (KDF),
- encrypting by said second node (B) the second nonce (N') with said second pre-shared key (PSK') to generate a second encrypted nonce (ENS),
- transmitting by said second node (B) said second encrypted nonce (ENS) to the first node (A),
- receiving by said first node (A) said second encrypted nonce (ENS) from the second node (B),
- decrypting by said first node (A) said second encrypted nonce (ENS) with the first pre-shared key (PSK) to retrieve a second nonce (N'),
- comparing by said first node (A) the second nonce (N') with the first nonce (N),
- upon the result of said comparison, sending by said first node (A) a result notification (R) to the second node (B),
- receiving by said second node (B) from said first node (A) said result notification (R).

2. A first method (Mth) according to claim 1, wherein said first method (Mth) further comprises :
- getting by the first node A the master key MK from the first secure zone (Z_{A}) before the derivation of the first pre-shared key (PSK), and
- getting by the second node (B) the master key (MK) from the second secure zone (Z_{B}) before the decryption of the first encrypted nonce (ENM).

3. A first method (Mth) according to any of the preceding claims, wherein the encryption of the pre-shared key (PSK) and the decryption of the second encrypted nonce (ENS) are performed using a symmetric encryption algorithm.

4. A first method (Mth) according to any of the preceding claims, wherein the first nonce (N) is generated randomly.

5. A first method (Mth) according to any of the preceding claims, wherein the first method (Mth) further comprises deleting by the first node (A) the master key (MK) from the first non-secure zone (Z'_{A}) after the decryption of the second encrypted nonce (ENS).

6. A first method (Mth) according to any of the preceding claims, wherein the first method (Mth) further comprising deleting by the second node (B) the master key (MK) from the second non-secure zone (Z'_{B}) after the derivation of said second pre-shared key (PSK').

7. A second method (Mth') for IPSec communication between a first node (A) and a second node (B), wherein said second method (Mth') comprises the steps of the first method (Mth) and further comprises if upon the comparison of the second nonce (N') with the first nonce (N), the second nonce (N') matches the first nonce (N) :
- performing a mutual authentication between said first node (A) and said second node (B) with said first pre-shared key (PSK),
- creating an IPSec tunnel (IPSecT) between said first node (A) and said second node (B) using the first pre-shared key (PSK).

8. A first node (A) for a secure exchange of a first pre-shared key (PSK) with a second node (B) for an IPSec communication, wherein said first node (A) comprises a first secure zone (Z_{A}) where a master key (MK) is stored and a first non-secure zone (Z'_{A}) and is configured to :
- generate a first nonce (N) at each boot session (Bt),
- derive the first pre-shared key (PSK) based on said first nonce (N) and on said master key (MK) using a key derivation function (KDF),
- encrypt the first pre-shared key (PSK) with the master key (MK) to generate in a first encrypted nonce (ENM),
- transmit said first encrypted nonce (ENM) to the second node (B),
- receive a second encrypted nonce (ENS) from the second node (B) that has been encrypted with a second pre-shared key (PSK'),
- decrypt said second encrypted nonce (ENS) with the first pre-shared key (PSK) to retrieve a second nonce (N'),
- compare the second nonce (N') with the first nonce (N),
- upon the result of said comparison, send a result notification (R) to the second node (B).

9. A first node (A) according to the preceding claim, wherein said first node (A) is part of a vehicle (V) or independent from a vehicle (V).

10. A first node (A) according to claim 8 or 9, wherein said first node (A) is further configured to get the master key (MK) from the first secure zone (Z_{A}).

11. A second node (B) for a secure exchange of a first pre-shared key (PSK) with a first node (A) for an IPSec communication, wherein said second node (B) comprises a second secure zone (Z_{B}) where a master key (MK) is stored and a second non-secure zone (Z'_{B}) and is configured to :
- receive from said first node (A) a first encrypted nonce (ENM) that is based on a first pre-shared key (PSK) and on said master key (MK), said first pre-shared key (PSK) being derived from a first nonce (N) and said master key (MK),
- decrypt said first encrypted nonce (ENM) with the master key (MK) to retrieve a second nonce (N'),
- derive a second pre-shared key (PSK') using said second nonce (N') and the master key (MK) using a key derivation function (KDF),
- encrypt the second nonce (N') with the second pre-shared key (PSK') to generate a second encrypted nonce (ENS),
- transmit said second encrypted nonce (ENS) to the first node (A),
- receive from said first node (A) a result notification (R) based on a comparison of the second nonce (N') with the first nonce (N) generated by the first node (A).

12. A second node (B) according to the preceding claim, wherein said second node (B) is part of a vehicle (V) or independent from a vehicle (V).

13. A second node (B) according to claim 11 or 12, wherein said second node (B) is further configured to get the master key (MK) from the second secure zone (Z_{B}).

14. A system (Sys) comprising at least one node among a first node (A) according to any of the preceding claims 8 to claim 10 and a second node (B) according to any of the preceding claims 11 to 13.

15. A system (Sys) according to the preceding claim, wherein said system (Sys) is a telematics control unit of a vehicle (V).
